# EUROPEAN PATENT SPECIFICATION

(11) **EP 3 458 778 B1**
(45) Date of publication and mention of the grant of the patent: **26.07.2023**
(21) Application number: 17726009.8
(22) Date of filing: 15.05.2017
(51) Int. Cl.: F24D 19/00, C02F 1/00, C02F 5/08, C02F 1/68, F24D 3/10

(54) **APPARATUS FOR AND OPERATION OF A LIQUID FLOW CIRCUIT CONTAINING A CHEMICAL ADDITIVE**
VORRICHTUNG FÜR UND OPERATION EINES FLÜSSIGKEITSFLUSSKREISLAUFES MIT EINEM CHEMISCHEN ADDITIV
APPAREIL POUR ET FONCTIONNEMENT D'UN CIRCUIT D'ÉCOULEMENT DE LIQUIDE CONTENANT UN ADDITIF CHIMIQUE

(30) Priority: 16.05.2016 GB 201608527
(43) Date of publication of application: 27.03.2019
(73) Proprietor: Sentinel Performance Solutions Ltd, Daresbury Warrington Cheshire WA4 4BS (GB)
(72) Inventor: DAY, Paul, 2000 Antwerp (BE); HOCK, Jonathan Edmund, Warrington Cheshire WA4 2HT (GB)
(74) Representative: Badger, John Raymond
(86) International application number: PCT/GB2017/000074
(87) International publication number: WO 2017/198983

(56) References cited:
- EP-A2- 1 995 368
- EP-A2- 1 995 368
- WO-A1-01/80967
- WO-A1-01/80967
- WO-A2-2014/145337
- WO-A2-2014/145337
- GB-A- 2 422 637
- GB-A- 2 422 637
- US-A1- 2006 060 512
- US-A1- 2006 060 512
- US-A1- 2009 045 919
- US-A1- 2009 045 919

## Description

This invention relates to the operation of and apparatus for a liquid flow circuit of the closed circuit type, such as the closed circuit of a central heating or cooling system, in which the circulated liquid, typically water or a water-based liquid, contains a chemical additive such as an additive selected to inhibit corrosion within the system and or the formation of scale deposits which potentially would reduce the efficiency of the system.

The liquid flow circuit may be that of a system which comprises a heat source such as a boiler and one or more heat emitting units such as radiators, or which comprises a cooling system comprising one or more heat extraction units.

A feature of closed circuit type heating and cooling systems is that it is necessary to fully or partially drain the system in the event of a system component, such as a central heating boiler, a radiator or heat extraction unit needing to be removed or replaced.

A problem which then arises is that often the system is re-filled or topped up only with water and either lost inhibitor is not replaced or an incorrect type of inhibitor is added to the system. Thus the system is then operated without any inhibitor in the case of a system that has been fully drained, or with only an excessively diluted solution or incorrect inhibitor in the case of a system which has been partially drained. In either case the system components are then exposed to a heightened risk of corrosion and or scale formation.

Similarly, for example, there is the risk of an incorrect additive instead of an appropriate cleaning fluid being employed during a system flushing operation.

In WO 2014/145337 A2 there is described a method and apparatus for adding an additive to an aquatic environment. In EP 1995368 A2 there is described apparatus for adding in sequence different chemicals to an appliance such as a dishwasher. GB 2 422 637 A discloses a closed circuit type liquid flow system according to the preamble of claim 1.

The present invention seeks to provide apparatus for and a method of operation of a liquid flow system which requires the introduction of a chemical additive such as a corrosion inhibitor or a cleaning solution.

In accordance with the present invention there is provided a closed circuit type liquid flow system as defined in claim 1.

The dosing device may be permanently secured to the liquid flow circuit or be removable therefrom. A valve may be provided between the dosing device and liquid flow circuit whereby the dosing device may be isolated from fluid communication with the liquid flow circuit.

The liquid flow circuit may be a pressurised type circuit.

The RFID device may, for example, store data related to one or more of the identity of chemical within the container, date of filling of the container, pressure of chemical in the container, volume of the container, volume of chemical remaining in the container when part used, whether the container should be replaced or whether the container should be rendered non reusable.

The communication device may be an integral part of the dosing device or may be separate therefrom and in either wired or wireless communication with the dosing device.

In addition to the communication device being able to receive data from the container it may be operable to transmit data to the container. Thus, for example, the communication device may be operable to send to the RFID device a status report related to the volume of chemical supplied from the container to the dosing device, or volume of chemical remaining. It may be operable to cause the RFID device to record the container as used or non-reusable, for example when all or substantially all chemical has been dispensed from the container, whereby subsequent use of the container in the same or another system is inhibited.

The RFID device may comprise an active type tag or a passive type tag.

A part of the system, for example the communication device or the dosing device, may comprise a charging circuit operable to provide power to the RFID device by electromagnetic induction. The container may have secured thereto an RFID device which comprises an RFID chip and a wire coil which acts both as an aerial and to receive power for the chip by electromagnetic induction.

The system may comprise an alarm or other visual or audible alert to signal the need to replace a container, for example if a container has become empty or is a container containing an incorrect type of chemical for use in the liquid flow circuit or insufficient chemical additive to provide the required level of concentration.

The system may comprise a data store in communication with the communication device or dosing device and which stores data related to he type(s) of chemical appropriate for use in the system. The data store may be responsive to information related to the operational phase of the liquid flow system, for example whether the system is being flushed with cleaning fluid or is being filled or topped up with chemical additive for long term corrosion inhibition.

The communication device may be operable to transmit to a remote server, such as a cloud based server, information received by or transmitted from the communication device, for example to or from the RFID device or a separate monitoring device that monitors the concentration of additive in the system or a parameter related to that concentration.

A monitoring device may be operable to provide information to the dosing device relating to the required quantity of chemical additive to be introduced into the liquid flow circuit and/or the monitoring device may be operable to receive information from the dosing device in respect of the quantity of chemical additive that has been introduced into the liquid flow circuit. The dosing device may be operable automatically to introduce chemical additive into the liquid flow circuit in response to a signal from the monitoring device or it may be manually operable.

The container of chemical, typically a liquid chemical, may have a chip and coil RFID device directly secured thereto.

The adaptor may comprise a retention formation whereby it may be a click type fit to the container body and may engage with the container body in a manner that permits relative rotation of the adaptor and container body. Alternatively the adaptor may be non-rotatable relative to the container body.

The adaptor may define a through bore through which the outlet nozzle of the container body may extend or into which a part of the dosing device outlet port may extend for connection and fluid communication with the container nozzle. In the case of an adaptor to which an RFID chip and coil are secured, the coil may extend around the through bore, for example for alignment with an induction coil that extends around the inlet port of the dosing device.

The adaptor may comprise a cap receiving formation, such as a circumferentially extending groove to receive a standard aerosol cap to protect a nozzle extending through the adaptor when not secured to the dosing device.

The adaptor location and receiving formations may comprise shape features which are complementary and the receiving formation may have a shape and dimension that is engagable substantially only by an adaptor having a location formation of a complementary shape.

The adaptor may comprise a location formation that comprises at least two inclined wing formations that extend radially outwards from a central spigot portion of the adaptor and define helically shaped surfaces to engage with the complementary grooves in the dosing module inlet port.

The location and receiving formations may be of a type which causes the container nozzle to engage progressively with the inlet port as the adaptor is rotated relative to the inlet port and, in contrast to a bayonet type configuration, guide movement of the nozzle in a direction away from the inlet port only when rotation is in a reverse direction.

Accordingly there may be provided an adaptor having a retention formation for securing to a complementary formation of a container of chemical additive and a location formation for engaging with a receiving formation of the inlet port of a dosing device, the location formation being shaped whereby rotation of the adaptor in a first direction relative to the dosing device progressively draws the container towards the dosing device and wherein the container moves away from the dosing device only in the event of relative rotation in a reverse direction.

The adaptor may incorporate one or more other features as more specifically described herein.

There may be provided a series of containers each containing a different chemical additive and each container comprising an attachment formation for securing the container to a dosing device of a liquid flow circuit for introduction of the chemical additive into the liquid flow circuit, wherein each container contains a chemical additive different from the additive of other containers of the series and wherein each attachment formation is different from the attachment formations of the other containers of the series. The attachment formation of a container may be that of an adaptor of a type as herein described.

A series of dosing modules each may have an inlet port formation for securing a container of said series to the dosing module and wherein each container of the series comprises a formation that is engagable with only one of the dosing modules of the series. Alternatively one dosing module may comprise a plurality of inlet ports each of which is engagable with only one of the dosing modules of the series. The inlet port formation(s) of a dosing module for engagement by a container of the series of containers may be of a type as herein described.

The dosing device may incorporate or be responsive to software which is substantially integral with that of a monitoring device and or a communication device.

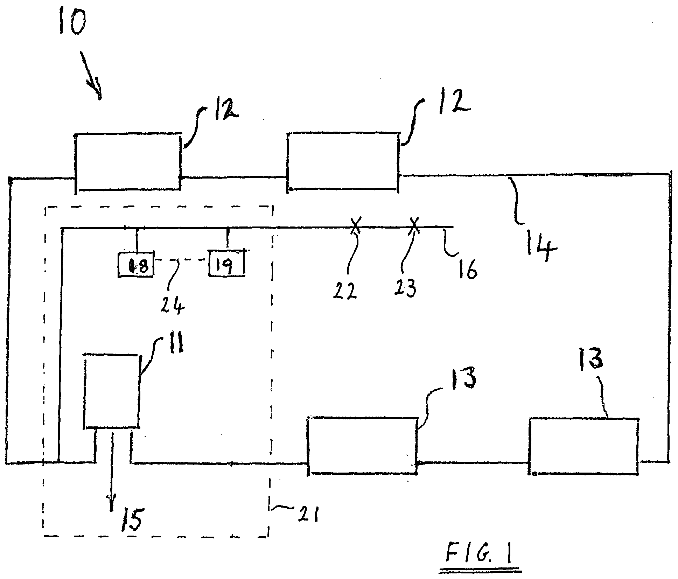

Embodiments of the present invention will now be described, by way of example only, with reference to the accompanying diagrammatic drawings in which: -
Figure 1 is a schematic view of a central heating system in accordance with the present invention;

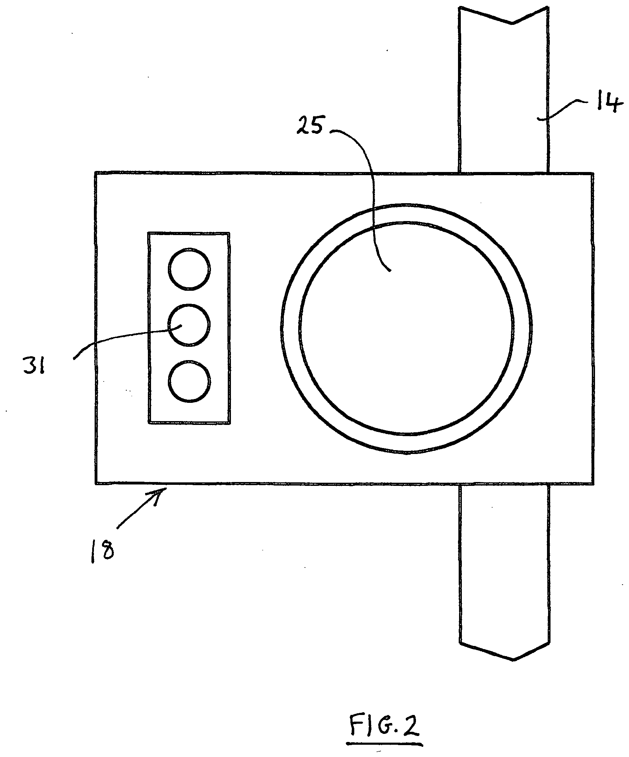

Figure 2 shows a part of the system of figure 1 comprising a dosing module;
Figure 3 is a perspective view of the dosing module of figures 1 and 2;
Figure 4 is a view of a container of chemical additive, part cut away;
Figure 5 is a perspective view of an upper part of the container of Figure 4;
Figure 6 is a side view of an adaptor for securing to the container of Figure 4;
Figure 7 is a perspective view of an upper part of the adaptor of Figure 6;
Figure 8 is a perspective view of an underside of the adaptor of Figure 6, and
Figure 9 is a perspective view of part of the container assembled with the adaptor of Figure 6.

A domestic central heating system 10 comprises a condensing boiler heat exchanger 11, two radiators 12 located at first floor level and two radiators 13 at ground floor level, said radiators and boiler being inter-connected in a closed loop pressurised circuit by pipe work 14. A valve 15 facilitates drainage of the system and a pressurised dosing device 18 facilitates addition of corrosion and lime scale inhibitor into the water contained within the circuit.

In proximity to the heat exchanger 11 there is a supply pipe 16 which is substantially permanently connected to a mains water supply and, via a pressure control valve 22 facilitates flow of water into the pipe work 14 of the liquid flow circuit of the system 10. Fitted to that pipe 16 is a T connector which houses a volume flow sensor 17 which is operable to measure the volume flow of water through the pipe 16. The volume flow sensor 17 is positioned upstream of the position at which the dosing device 18 introduces inhibitor for the liquid flow circuit.

Associated with the sensor 17 is a display 19 which provides a visual display of the volume of water that has flowed through the pipe 16. The sensor and display form part of a management device that also comprises a data store and processing function whereby, in use, the volume flow information may be used to calculate the quantity of a chemical additive, whether a cleaning additive or inhibitor, that should be added to the water in the pipe work 14 via the dosing device 18. The required quantity is then indicated on the display 19.

The heat exchanger 11, the volume flow sensor 17 and the dosing device in the example of this embodiment of the invention are all provided integrally within a boiler casing 21.

The system may comprise a monitoring device that monitors the concentration of additive in the system or a parameter related to that concentration.

The dosing device 18 comprises an inlet port 25 which is shaped and dimensioned to receive and retain a container 30 of pressurised liquid chemical additive.

The dosing device 18 also comprises an indicator panel 31 provided with three lights which indicate whether or not the dosing device is functioning correctly and, if necessary, to provide a visual alarm signal.

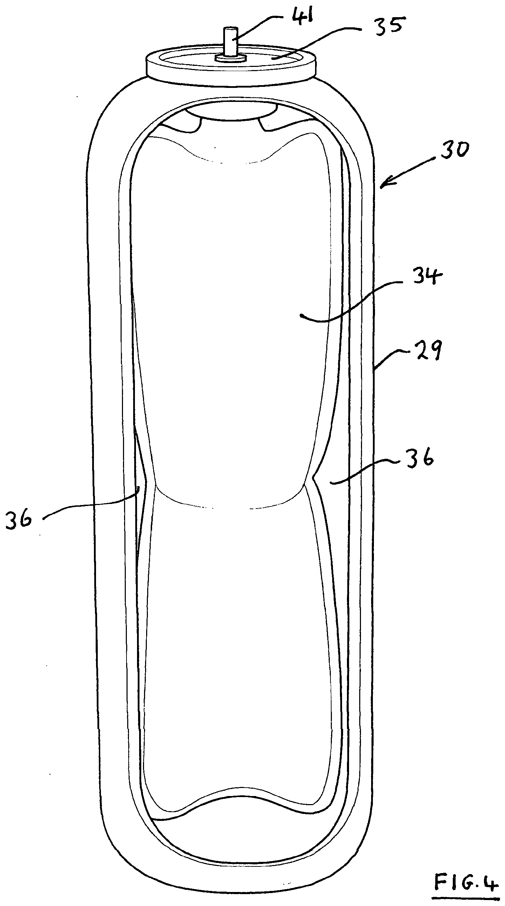

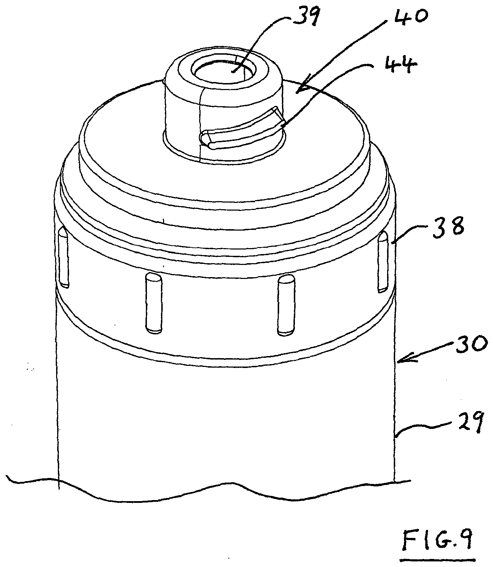

The container 30 (see Figures 4 and 9) comprises a container body 29 and an adaptor 32 which is secured to the body for connecting the container body 29 relative to the inlet port 25 of the dosing device.

The container body 29 (see Figure 4) comprises a metal can which features bag-on-valve technology such that within the container body 29 liquid chemical is contained within a flexible bag 34 that is in communication with an outlet valve 35 having an outlet nozzle 41.

Within the container body the flexible bag 34 separates the liquid chemical therein from surrounding propellant gas present in a space 36 between the bag and container body. Typically the propellant gas is initially pressurised to a pressure of approximately 10 bar.

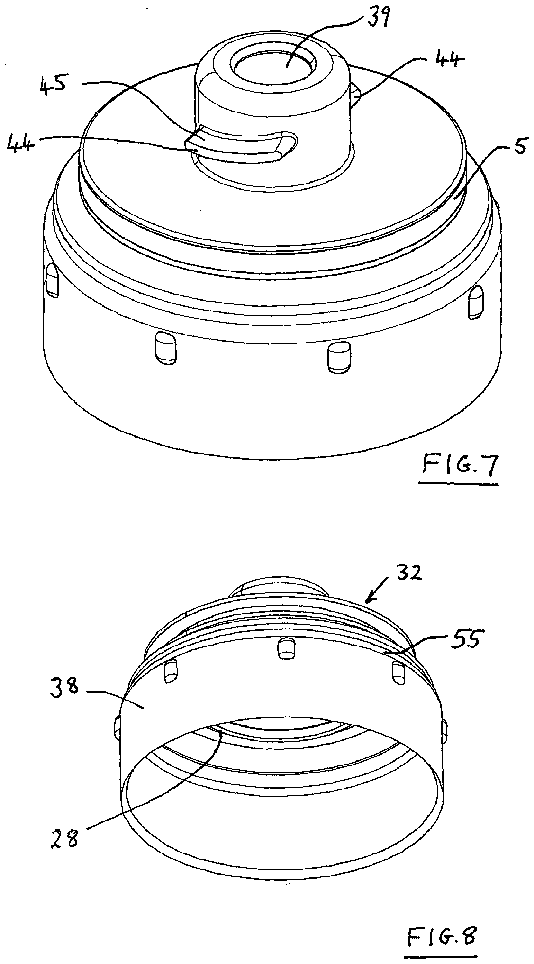

The adaptor 32 has an internal rib 28 (see Figure 8) which enables it to be secured to the container body by a snap fit type engagement of that rib with a corresponding circumferentially extending bead 37 that is formed integrally with an end region of the container body 29 and positioned to extend around the outlet valve 35. The rib 28 and bead 37 are dimensioned such that, following snap-fit assembly, removal of the adaptor from the can is prevented but the adaptor remains rotatable relative to the can.

The adaptor has an outer cylindrically shaped skirt 38 of a diameter greater than that of the rib 28 and bead 37 for ease of gripping to rotate the adaptor for engagement with or removal from the inlet port 25 of the dosing device 18.

The upper end 40 of the adaptor has a cylindrical formation 42 which defines an opening 39 through which a nozzle 49 of the dosing device inlet port extends when the container is secured to the inlet port.

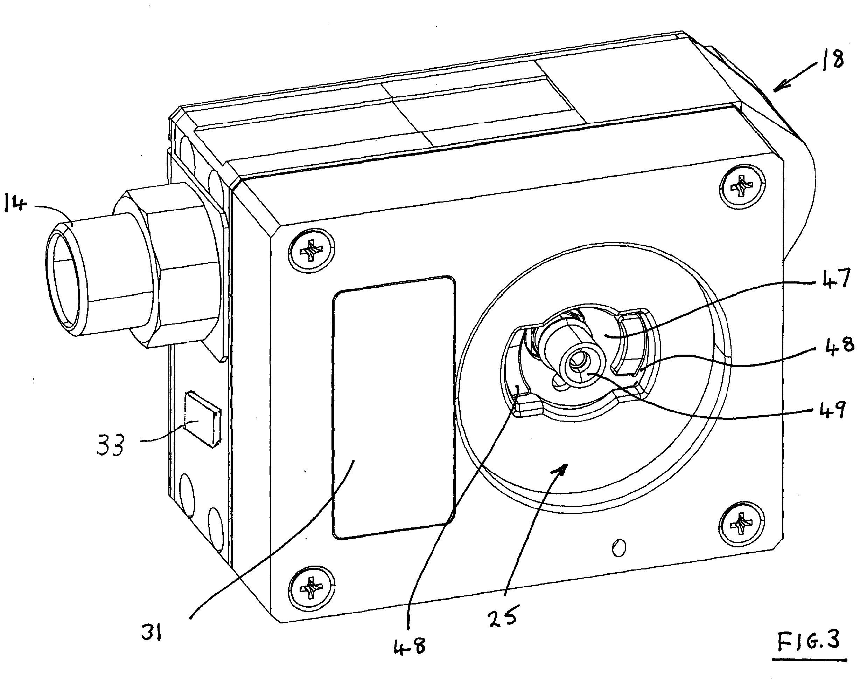

The cylindrical formation 42 has a radially outer surface 43 that is provided with a pair of diametrically opposed wing type formations 44 that define helically shaped retention surfaces 45, 46. The inlet port of the dosing device (see Figure 3) is shaped to provide a cavity 47 which receives the adaptor cylindrical formation 42, with the wings 44 initially aligned with complementary shaped recess regions 48 of the cavity 47. Subsequently, with light axial pressure, the adaptor may be rotated relative to the dosing device inlet port to move the adaptor outlet nozzle 41 into communication with a central spring loaded one way inlet valve associated with the nozzle 49 of the dosing device inlet port as the helically extending surfaces 45, 46 of the wing formations 44 and corresponding surfaces of the inlet port slide relative to one another during said rotation thereby progressively to move the adaptor into full engagement with the dosing device.

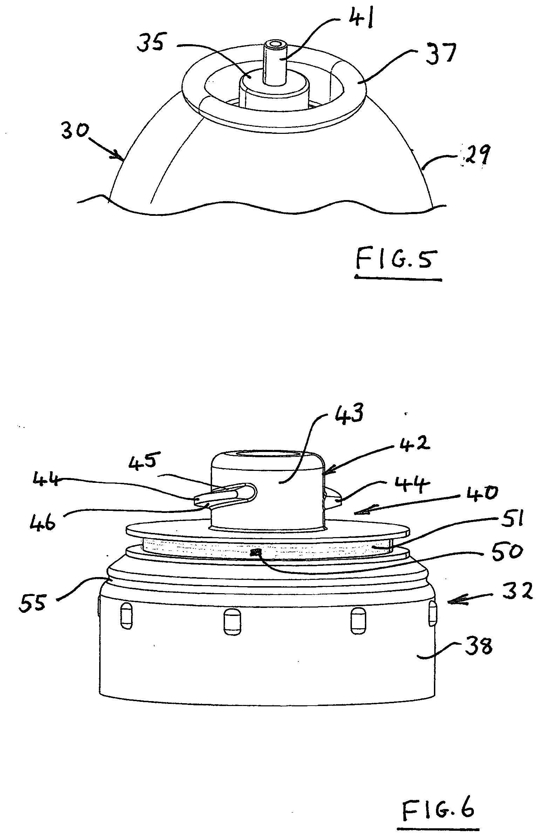

The adaptor 32 is provided with an RFID device (see Figure 6) comprising an RFID chip 50 and a coil 51 which acts as an aerial and also as a power source for the chip when the adaptor is secured to the dosing device. The coil 51 extends circumferentially around the longitudinal axis of the adaptor, between the cylindrical formation 42 and skirt 38 thereby to receive power by electro-magnetic induction from a power source coil (not shown) provided within the dosing device.

The chip 50 is pre-programmed with information such as data relating to the type and volume of chemical within the container and said data may then be received by a communication receiver 33, which may be positioned within the dosing device, to facilitate control and operation of the dosing device. Subsequent to use, a container may be removed from the dosing device by the simple action of rotation of the adaptor relative to the dosing device in a reverse direction.

A further feature of the adaptor is the provision of a cap retention groove 55 that extends circumferentially around the outer surface of the adaptor, this providing a means for temporary location of a protective cap (not shown) to protect the nozzle until the container is engaged with the dosing device.

In this embodiment of the invention the display 19 facilitates manual operation of the dosing device for introduction of cleaning fluid or inhibitor. However it is to be understood that the central heating system may be modified to incorporate for example automatic operation of the dosing device via a connection 24 in response to a signal from a monitoring device comprising said sensor 17 and display 19 and in response to data from the RFID chip 50. Optionally the feed pipe 16 may incorporate a shut off valve 23 which operates automatically to prevent further flow of water into the pipe work 14 in the event that the sensor 17 has detected a high volume of flow at a time other than initial commissioning or flushing or cleaning of the system, and which therefore is indicative of a significant leakage or drainage of liquid from the pipe work 14. Thus wastage of chemical additive from the container may be avoided or minimised

Optionally the system may incorporate, as a check on the concentration of chemical additive in the system, an on-line monitoring device.

Although the invention has been described by way of example in relation to a domestic central heating system it may be employed also in respect of other liquid flow systems such as that of a cooling system.

Having regard to the foregoing it will be understood that the present invention facilitates a more reliable and correct operation of a liquid flow circuit such as that of a heat transfer system.

## Claims

1. A closed circuit type liquid flow system (10) comprising a liquid flow circuit (14) and a dosing device (18) for introduction of a chemical additive into the liquid flow circuit, said dosing device comprising an inlet port (25) for fluid communication with the liquid flow circuit and a container (30) of chemical additive removably secured or adapted to be removably secured to said inlet port, **characterised in that** said container comprises a pressurised body (29) and an adaptor (32) for securing the container (30) to the dosing device, said adaptor comprising a location formation (44) to engage with a receiving formation (48) of the inlet port (25) whereby in use the adaptor is positioned to lie between the pressurised body (29) of the container and the inlet port (25) of the dosing device, wherein the container comprises a radio frequency identification (RFID) device (50) which stores data of a parameter related to the correct operation of the liquid flow circuit, said RFID device (50) being secured to the adaptor (32), and wherein the system comprises a communication device (33) configured to receive data from the container whereby the dosing device (18) is responsive to data received by the communication device (33), said adaptor (32) being provided with a retention formation (28) for permanent attachment of the adaptor to the container body (30) and the communication device (33) being operable to cause the RFID device to record the container as used or non-re-usable whereby subsequent use of the container in the same or another system is inhibited.

2. A system according to claim 1 wherein the RFID device (50) is adapted to store data related to one or more of the identity of chemical within the container, date of filling of the container, pressure of chemical in the container, volume of the container, volume of chemical remaining in the container when part used, whether the container should be replaced or whether the container should be rendered non reusable.

3. A system according to claim 1 or claim 2 wherein the communication device (33) is operable to transmit data to the container (30).

4. A system according to any one of the preceding claims wherein the system comprises a charging circuit operable to provide power to the RFID device (50) by electro-magnetic induction, preferably wherein the container has secured thereto an RFID device comprising an RFID (50) chip and a wire coil (51) which acts as an aerial and to receive power for the chip by electro-magnetic induction.

5. A system according to any one of the preceding claims and comprising a data store in communication with the communication device (33) or dosing device (18) and which stores data related to the types of chemical allowable for use in the system.

6. A system according to any one of the preceding claims and comprising a monitoring device (17,19) configured to monitor the concentration of additive in the system or a parameter related to that concentration and wherein the communication device is operable to transmit to a remote server information transmitted between the communication device and the monitoring device.

7. A system according to claim 6 wherein the monitoring device (17,19) is operable to provide information to the dosing device (18) related to the required quantity of chemical additive to be introduced into the liquid flow circuit and/or to receive information from the dosing device in respect of the quantity of chemical additive that has been introduced into the liquid flow circuit.

8. A system according to claim 6 or claim 7 wherein the dosing device (17) is operable automatically to introduce chemical additive into the liquid flow circuit in response to a signal from the monitoring device.

9. A system according to any one of the preceding claims wherein the adaptor defines a through-bore (38) through which an outlet nozzle (41) of the container body extends or into which a part (39) of a dosing device inlet port (25) extends for connection and fluid communication with the container nozzle, the RFID device comprising a chip (50) and coil (51) and wherein the coil extends circumferentially around the through-bore.

10. A system according to any one of the preceding claims wherein said location and receiving formations comprise shape features which are complementary and the receiving formation has a shape and dimension that is engagable substantially only by an adaptor having a location formation of a complementary shape.

11. A system according to claim 10 wherein the adaptor comprises a location formation comprising at least two circumferentially spaced inclined wing formations (44) extending radially outwards from a central spigot portion of the adaptor to define helically shaped surfaces (45,46) to engage with complementary grooves (48) in the dosing module inlet port.

12. A system according to claim 10 or claim 11 wherein the location and receiving formations (44,48) cause the container nozzle (41) to engage progressively with the inlet port as the adaptor (35) is rotated relative to the inlet port (25) and wherein the container moves away from the dosing device only in the event of relative rotation in a reverse direction.

## Patentansprüche

1. Flüssigkeitsströmungssystem (10) mit geschlossenem Kreislauf, das einen Flüssigkeitsströmungskreislauf (14) und eine Dosiervorrichtung (18) zum Einführen eines chemischen Zusatzstoffs in den Flüssigkeitsströmungskreislauf umfasst, wobei die Dosiervorrichtung eine Einlassöffnung (25) zur Fluidverbindung mit dem Flüssigkeitsströmungskreislauf und einen Behälter (30) mit chemischem Zusatzstoff umfasst, der abnehmbar an der Einlassöffnung befestigt ist oder dafür ausgelegt ist, abnehmbar daran befestigt zu werden, **dadurch gekennzeichnet, dass** der Behälter einen unter Druck stehenden Körper (29) und einen Adapter (32) zum Befestigen des Behälters (30) an der Dosiervorrichtung umfasst, wobei der Adapter eine Anordnungsformation (44) umfasst, um in eine Aufnahmeformation (48) der Einlassöffnung (25) einzugreifen, wodurch der Adapter im Gebrauch so positioniert ist, dass er zwischen dem unter Druck stehenden Körper (29) des Behälters und der Einlassöffnung (25) der Dosiervorrichtung liegt, wobei der Behälter eine Radiofrequenz-Identifikationsvorrichtung (RFID)-Vorrichtung (50) umfasst, die Daten eines Parameters speichert, der sich auf den korrekten Betrieb des Flüssigkeitsströmungskreislaufs bezieht, wobei die RFID-Vorrichtung (50) an dem Adapter (32) befestigt ist, und wobei das System eine Kommunikationsvorrichtung (33) umfasst, die so eingerichtet ist, dass sie Daten von dem Behälter empfängt, wodurch die Dosiervorrichtung (18) auf die von der Kommunikationsvorrichtung (33) empfangenen Daten anspricht, wobei der Adapter (32) mit einer Rückhalteformation (28) zur dauerhaften Befestigung des Adapters an dem Behälterkörper (30) versehen ist und die Kommunikationsvorrichtung (33) so betreibbar ist, dass sie die RFID-Vorrichtung veranlasst, den Behälter als verwendet oder nicht wiederverwendbar zu registrieren, wodurch eine nachfolgende Verwendung des Behälters in demselben oder einem anderen System verhindert wird.

2. System nach Anspruch 1, wobei die RFID-Vorrichtung (50) so ausgelegt ist, dass sie Daten speichert, die sich auf eines oder mehrere von Identität der Chemikalie im Behälter, Datum der Befüllung des Behälters, Druck der Chemikalie im Behälter, Volumen des Behälters, Volumen der im Behälter verbleibenden Chemikalie bei teilweiser Verwendung, die Frage, ob der Behälter ersetzt werden sollte oder ob der Behälter nicht-wiederverwendbar gemacht werden sollte, beziehen.

3. System nach Anspruch 1 oder Anspruch 2, wobei die Kommunikationsvorrichtung (33) so betreibbar ist, dass sie Daten an den Behälter (30) überträgt.

4. System nach einem der vorhergehenden Ansprüche, wobei das System einen Ladestromkreis umfasst, der so betreibbar ist, dass er die RFID-Vorrichtung (50) durch elektromagnetische Induktion mit Strom versorgt, wobei vorzugsweise an dem Behälter eine RFID-Vorrichtung befestigt ist, die einen RFID-Chip (50) und eine Drahtspule (51) umfasst, die als Antenne dient und durch elektromagnetische Induktion Strom für den Chip empfängt.

5. System nach einem der vorhergehenden Ansprüche, das einen Datenspeicher umfasst, der mit der Kommunikationsvorrichtung (33) oder der Dosiervorrichtung (18) in Verbindung steht und Daten speichert, die sich auf die Arten von Chemikalien beziehen, die für die Verwendung in dem System zulässig sind.

6. System nach einem der vorhergehenden Ansprüche, umfassend
eine Überwachungsvorrichtung (17, 19), die so eingerichtet ist, dass sie die Konzentration von Zusatzstoff im System oder einen mit dieser Konzentration zusammenhängenden Parameter überwacht, und wobei die Kommunikationsvorrichtung so betreibbar ist, dass sie die zwischen der Kommunikationsvorrichtung und der Überwachungsvorrichtung übertragenen Informationen an einen entfernten Server übermittelt.

7. System nach Anspruch 6, wobei die Überwachungsvorrichtung (17, 19) so betreibbar ist, dass sie der Dosiervorrichtung (18) Informationen in Bezug auf die erforderliche Menge des in den Flüssigkeitsströmungskreislauf einzubringenden chemischen Zusatzstoffs liefert, und/oder
dass sie von der Dosiervorrichtung Informationen über die Menge des chemischen Zusatzstoffs empfängt, die in den Flüssigkeitsstromkreis eingebracht wurde.

8. System nach Anspruch 6 oder 7, wobei die Dosiervorrichtung (17) so betreibbar ist, dass sie in Abhängigkeit von einem Signal von der Überwachungsvorrichtung automatisch einen chemischen Zusatzstoff in den Flüssigkeitsströmungskreislauf einbringt.

9. System nach einem der vorhergehenden Ansprüche, wobei der Adapter eine Durchgangsbohrung (38) eingrenzt, durch die sich eine Auslassdüse (41) des Behälterkörpers erstreckt oder in die sich ein Teil (39) einer Einlassöffnung (25) der Dosiervorrichtung zur Verbindung und Fluidkommunikation mit der Behälterdüse erstreckt, wobei die RFID-Vorrichtung einen Chip (50) und eine Spule (51) umfasst und wobei sich die Spule in Umfangsrichtung um die Durchgangsbohrung erstreckt.

10. System nach einem der vorhergehenden Ansprüche, wobei die Positionierungs- und Aufnahmeformationen Formmerkmale umfassen, die komplementär sind, und die Aufnahmeformation eine Form und Abmessung aufweist, die im wesentlichen nur durch einen Adapter mit einer Positionierungsformation einer komplementären Form in Eingriff gebracht werden kann.

11. System nach Anspruch 10, wobei der Adapter eine Positionierungsformation umfasst, die mindestens zwei in Umfangsrichtung beabstandete geneigte Flügelformationen (44) umfasst, die sich von einem zentralen Zapfenteil des Adapters radial nach außen erstrecken, um schraubenförmig geformte Oberflächen (45,46) einzugrenzen, die in komplementäre Nuten (48) in der Einlassöffnung des Dosiermoduls eingreifen sollen.

12. System nach Anspruch 10 oder Anspruch 11, wobei die Anordnungs- und Aufnahmeformationen (44,48) bewirken, dass die Behälterdüse (41) progressiv mit der Einlassöffnung in Eingriff kommt, wenn der Adapter (35) relativ zur Einlassöffnung (25) gedreht wird, und wobei sich der Behälter nur im Falle einer relativen Drehung in einer umgekehrten Richtung von der Dosiervorrichtung wegbewegt.

## Revendications

1. Système d'écoulement de liquide de type circuit fermé (10) comprenant un circuit d'écoulement de liquide (14) et un dispositif de dosage (18) pour l'introduction d'un additif chimique dans le circuit d'écoulement de liquide, ledit dispositif de dosage comprenant un orifice d'entrée (25) en communication fluidique avec le circuit d'écoulement de liquide et un récipient (30) d'additif chimique fixé de manière amovible ou adapté pour être fixé de manière amovible audit orifice d'entrée, **caractérisé en ce que** ledit récipient comprend un corps sous pression (29) et un adaptateur (32) pour fixer le récipient (30) au dispositif de dosage, ledit adaptateur comprenant une formation de positionnement (44) pour se mettre en prise avec une formation de réception (48) de l'orifice d'entrée (25) moyennant quoi lors de l'utilisation l'adaptateur est positionné pour se trouver entre le corps sous pression (29) du récipient et l'orifice d'entrée (25) du dispositif de dosage, ledit récipient comprenant un dispositif d'identification par radiofréquence (RFID) (50) qui stocke des données d'un paramètre relatif au bon fonctionnement du circuit d'écoulement de liquide, ledit dispositif RFID (50) étant fixé à l'adaptateur (32), et ledit système comprenant un dispositif de communication (33) configuré pour recevoir des données en provenance du récipient, moyennent quoi le dispositif de dosage (18) réagissant aux données reçues par le dispositif de communication (33), ledit adaptateur (32) étant doté d'une formation de rétention (28) pour la fixation permanente de l'adaptateur au corps de récipient (30) et le dispositif de communication (33) servant à amener le dispositif RFID à enregistrer le récipient comme utilisé ou non réutilisable moyennant quoi l'utilisation ultérieure du récipient dans le même système ou dans un autre système est empêchée.

2. Système selon la revendication 1, ledit dispositif RFID (50) étant adapté pour stocker des données relatives à un ou plusieurs parmi l'identité du produit chimique à l'intérieur du récipient, la date de remplissage du récipient, la pression du produit chimique dans le récipient, le volume du récipient, le volume de produit chimique restant dans le récipient lorsqu'une partie est utilisée, pour savoir si le récipient doit être remplacé ou si le récipient doit être rendu non réutilisable.

3. Système selon la revendication 1 ou la revendication 2, ledit dispositif de communication (33) servant à transmettre des données au récipient (30).

4. Système selon l'une quelconque des revendications précédentes, ledit système comprenant un circuit de charge servant à fournir de l'énergie au dispositif RFID (50) par induction électromagnétique, de préférence audit récipient est fixé un dispositif RFID comprenant une puce de dispositif RFID (50) et une bobine de fil (51) qui agit en tant qu'antenne et pour recevoir de l'énergie par induction électromagnétique.

5. Système selon l'une quelconque des revendications précédentes et comprenant un dispositif de stockage de données en communication avec le dispositif de communication (33) ou le dispositif de dosage (18) et qui stocke des données relatives aux types de produits chimiques pouvant être utilisés dans le système.

6. Système selon l'une quelconque des revendications précédentes et comprenant
un dispositif de surveillance (17, 19) configuré pour surveiller la concentration d'additif dans le système ou un paramètre relatif à cette concentration et ledit dispositif de communication servant à transmettre à un serveur distant des informations transmises entre le dispositif de communication et le dispositif de surveillance.

7. Système selon la revendication 6, ledit dispositif de surveillance (17, 19) servant à fournir des informations au dispositif de dosage (18) relatives à la quantité requise d'additif chimique à introduire dans le circuit d'écoulement de liquide et/ou
à recevoir des informations en provenance du dispositif de dosage pour ce qui est de la quantité d'additif chimique qui a été introduite dans le circuit d'écoulement de liquide.

8. Système selon la revendication 6 ou la revendication 7, ledit dispositif de dosage (17) servant automatiquement à introduire un additif chimique dans le circuit d'écoulement de liquide en réponse à un signal en provenance du dispositif de surveillance.

9. Système selon l'une quelconque des revendications précédentes, ledit adaptateur définissant un alésage traversant (38) à travers lequel une buse de sortie (41) du corps de récipient s'étend ou dans lequel une partie (39) d'un orifice d'entrée (25) de dispositif de dosage s'étend pour un raccordement et une communication fluidique avec la buse de récipient, le dispositif RFID comprenant une puce (50) et une bobine (51) et ladite bobine s'étendant circonférentiellement autour de l'alésage traversant.

10. Système selon l'une quelconque des revendications précédentes, lesdites formations de positionnement et de réception comprenant des caractéristiques de forme qui sont complémentaires et ladite formation de réception possédant une forme et une dimension qui font qu'elle ne peut être mise en prise uniquement qu'avec un adaptateur possédant une formation de positionnement de forme complémentaire.

11. Système selon la revendication 10, ledit adaptateur comprenant une formation de positionnement comprenant au moins deux formations d'ailes inclinées espacées sur la circonférence (44) s'étendant radialement vers l'extérieur à partir d'une partie d'embout mâle centrale de l'adaptateur pour définir des surfaces de forme hélicoïdale (45, 46) pour se mettre en prise avec des rainures complémentaires (48) dans l'orifice d'entrée de module de dosage.

12. Système selon la revendication 10 ou la revendication 11, lesdites formations de positionnement et de réception (44, 48) amenant la buse (41) de récipient à se mettre en prise progressivement avec l'orifice d'entrée tandis que l'adaptateur (35) est tourné par rapport à l'orifice d'entrée (25) et ledit récipient s'éloignant du dispositif de dosage uniquement dans le cas d'une rotation relative en sens inverse.
